# EUROPÄISCHE PATENTSCHRIFT

(11) **EP 2 701 934 B1**
(45) Veröffentlichungstag und Bekanntmachung des Hinweises auf die Patenterteilung: **31.12.2014**
(21) Anmeldenummer: 12711588.9
(22) Anmeldetag: 08.03.2012
(51) Int. Cl.: B60K 13/04

(54) **KOMPAKTES ELASTISCHES FESTLAGER**
COMPACT ELASTIC FIXED BEARING
SUPPORT FIXE ÉLASTIQUE COMPACT

(30) Priorität: 11.03.2011 DE 102011001235
(43) Veröffentlichungstag der Anmeldung: 05.03.2014
(73) Patentinhaber: WEGU GmbH Schwingungsdämpfung, 34123 Kassel (DE)
(72) Erfinder: GEBHARDT, Willi, 34117 Kassel (DE); ZIMMERMANN, Horst, 34260 Kaufungen (DE); GLAMPKE, Sebastian, 34260 Kaufungen (DE)
(74) Vertreter: REHBERG HÜPPE + PARTNER
(86) Internationale Anmeldenummer: PCT/EP2012/054038
(87) Internationale Veröffentlichungsnummer: WO 2012/123334

(56) Entgegenhaltungen:
- WO-A2-2007/037924
- DE-U- 7 116 069
- FR-A1- 2 394 715
- FR-A1- 2 859 414
- US-B1- 6 405 826

## Beschreibung

### TECHNISCHES GEBIET DER ERFINDUNG

Die Erfindung bezieht sich auf ein elastisches Festlager für die Lagerung eines dynamisch beanspruchten abzustützenden Bauteils an einem abstützenden Bauteil, das die Merkmale des Oberbegriffs des unabhängigen Patentanspruchs 1 aufweist.

Die Erfindung befasst sich insbesondere mit elastischen Festlagern zur Aufhängung der Abgasanlage eines Kraftfahrzeugs am Fahrzeugboden des Kraftfahrzeugs.

Unter einem elastischen Festlager wird hier ein Lager verstanden, das mit einem formsteifen Bauelement starr und damit auch drehfest an dem abstützenden Bauteil, insbesondere also an einem Fahrzeugboden, zu befestigen ist.

### STAND DER TECHNIK

Ein elastisches Festlager zur Lagerung einer Abgasanlage am Fahrzeugboden eines Kraftfahrzeugs, das einen formsteifen Rahmen, Befestigungseinrichtungen, um den Rahmen starr an dem abstützenden Bauteil zu befestigen, und einen Federkörper aufweist, der innerhalb des Rahmens in einer Hauptebene des Festlagers eine Lagerbuchse für das abzustützende Bauteil elastisch abstützt, wobei der Umfang des Federkörpers in der Hauptebene des Festlagers eine rechteckige Grundform aufweist und wobei der aus einem Elastomerwerkstoff hergestellte Federkörper formschlüssig von dem Rahmen gehalten wird, ist aus der EP 0 184 661 A2 bekannt. Hier weist der Federkörper einen ringförmigen inneren Teil, der als Lagerbuchse dient, einen ringförmigen äußeren Teil sowie die beiden Teile verbindende, den Zwischenraum nur teilweise ausfüllende Federstreben auf. Als formsteifer Rahmen ist ein Metallbügel vorgesehen, der den Federkörper mit leichter Vorspannung an den Fahrzeugboden andrückt. Um den Federkörper senkrecht zu der Hauptebene des Festlagers in dem Metallbügel zu halten, weist der Federkörper an seinem Außenumfang eine Verankerungsrippe auf, die in eine Nut des Metallbügels eingreift, oder umgekehrt der Metallbügel eine Verankerungsrippe, die in eine Nut mit Federkörper eingreift. Hierdurch soll eine aufwändige Herstellung einer Metall-Gummi-Verbindung entfallen und sich der Vorteil ergeben, dass der Federkörper als Einzelteil austauschbar gestaltet ist. So können auch verschiedene Federkörper, beispielsweise unterschiedlicher Shore-Härte, in Verbindung mit dem identisch ausgebildeten Metallbügel eingesetzt werden. Das bekannte Festlager ist so, wie es in der EP 0 184 661 A2 beschrieben ist, nicht zum Einsatz gekommen. Vielmehr wurden bei den praktisch hergestellten elastischen Festlagern zur Lagerung einer Abgasanlage am Fahrzeugboden eines Kraftfahrzeugs der äußere Teil des Federkörpers und die Federelemente unmittelbar an den Metallbügel anvulkanisiert, um den Federkörper an dem Metallbügel zu sichern. Das bekannte elastische Festlager weist zudem ganz erhebliche Abmessungen von mehr als 10 cm in allen Richtungen in der Hauptebene des Festlagers allein im Bereich des Federkörpers auf.

Bei einem weiteren bekannten elastischen Festlager weist ein Federkörper einen ringförmigen inneren Teil und einen U-förmigen äußeren Teil auf, wobei der ringförmige innere Teil über Federelemente in dem U-förmigen äußeren Teil elastisch ausgehängt ist. Diese Federelemente füllen nicht den gesamten Zwischenraum zwischen dem inneren Teil und dem äußeren Teil aus. Angeordnet ist der Federkörper im Wesentlichen in einem formsteifen Rahmen, der aus einem in der Hauptebene des Festlagers U-förmigen und senkrecht dazu rinnenförmigen ersten Rahmenteil und einem zweiten Rahmenteil ausgebildet ist, an dem die freien Enden des U-förmigen Rahmenteils festgelegt sind. An diesen freien Enden ist der U-förmige Rahmenteil geschlitzt, wobei sich der Federkörper durch jeden der beiden Schlitze hindurch erstreckt und dahinter ein Verankerungselement auf der Außenseite des U-förmigen Teils des formsteifen Rahmens aufweist. Die beiden Verankerungsteile stellen sicher, dass der Federkörper auch bei seitlicher Belastung des bekannten Festlagers, das ebenfalls für die Aufhängung einer Abgasanlage am Fahrzeugboden eines Kraftfahrzeugs vorgesehen ist, nicht aus dem formsteifen Rahmen heraus gelangt. Dieses bekannte elastische Festlager ist zwar etwas kompakter als das aus der EP 0 184 661 A2 bekannte elastische Festlager, weist aber immer noch vergleichsweise große Abmessungen in seiner Hauptebene auf, auch wegen der Verankerungskörper auf der Außenseite des U-förmigen Teils des formsteifen Rahmens.

Ein weiteres elastisches Festlager ist aus der WO 2007/037924 A2 bekannt. Bei diesem Festlager ist der Federkörper aus Elastomerwerkstoff an einen formsteifen Rahmen anvulkanisiert, der unmittelbar zur starren Befestigung an einem abstützenden Bauteil vorgesehen ist oder zur starren Befestigung an dem abstützenden Bauteil mit einem rahmenförmigen Befestigungs-element verbunden, beispielsweise verpresst ist. Der Federkörper bildet innerhalb des Rahmen, an den er anvulkanisiert ist, eine Lagerbuchse für das abstützende Bauteil aus, bei dem es sich erneut insbesondere um eine Abgasanlage eines Kraftfahrzeugs handelt, die an einem Fahrzeugboden zu lagern ist und die über einen Befestigungsbolzen in die Lagerbuchse eingreift. In den Federkörper des bekannten elastischen Festlagers erstreckt sich von beiden Seiten normal zu seiner Hauptebene je eine ringförmige Ausnehmung mit geschlossenem Grund um die zentrale Lagerbuchse, wobei sich diese beiden Ausnehmungen in der Hauptebene des bekannten Festlagers überlappen. So verbleibt zwischen dem Rahmen und der Lagerbuchse des bekannten Festlagers ein trichterförmig um die Lagerbuchse umlaufender Steg. Dieser Steg verläuft dabei von der Lagerbuchse nach unten mit größerer Dicke, flacherem Winkel zu der Hauptebene des Festlagers und über einen größeren Abstand zwischen der Lagerbuchse und dem Rahmen in der Hauptebene als von der Lagerbuchse nach oben.

Ein elastisches Festlager zur Lagerung einer Abgasanlage am Fahrzeugboden eines Kraftfahrzeugs, das die Merkmale des Oberbegriffs des unabhängigen Patentanspruchs 1 aufweist, ist aus der FR 2 394 715 A1 bekannt.

### AUFGABE DER ERFINDUNG

Der Erfindung liegt die Aufgabe zugrunde, ein elastisches Lager aufzuzeigen, das trotz hoher Leistungsfähigkeit extrem kleine äußere Abmessungen aufweist.

### LÖSUNG

Die Aufgabe der Erfindung wird durch ein elastisches Festlager mit den Merkmalen des unabhängigen Patentanspruchs 1 gelöst. Bevorzugte Ausführungsformen des neuen elastischen Festlagers sind in den abhängigen Patentansprüchen beschrieben.

### BESCHREIBUNG DER ERFINDUNG

Bei dem neuen elastischen Festlager für die Lagerung eines dynamisch beanspruchten abzustützenden Bauteils an einem abstützenden Bauteil, das einen formsteifen Rahmen, Befestigungseinrichtungen, um den Rahmen starr an dem abstützenden Bauteil zu befestigen, und einen Federkörper, der innerhalb des Rahmens in einer Hauptebene des Festlagers eine Lagerbuchse für das abzustützende Bauteil elastisch abstützt, aufweist, ist der aus einem Elastomerwerkstoff hergestellte Federkörper in eine Kavität des Rahmens eingesetzt, die eine quaderförmige Grundform aufweist und deren parallel zu der Hauptebene des Festlagers verlaufenden Wandungen zentrale Öffnungen mit abgerundetem Umfang für den Durchtritt des abzustützenden Bauteils aufweisen.

Bei dem neuen elastischen Lager ist der Federkörper aus dem Elastomerwerkstoff separat hergestellt und erst dann in die Kavität des Rahmens eingesetzt. Dabei ist die äußere Form des Federkörpers an die quaderförmige Grundform der Kavität angepasst. Das heißt, der Federkörper selbst weist eine quaderförmige Grundform auf. Vorzugsweise liegt er dabei nicht nur punktuell, sondern flächig an den die Kavität begrenzenden Wandungen an und weist hierdurch eine definierte Lage in dem Rahmen und damit auch gegenüber dem abstützenden Bauteil, an dem der Rahmen zu befestigen ist, auf. Dies gilt insbesondere in Richtung normal zu der Hauptebene des Festlagers. Die so erreichte Lagedefinition des Federkörpers ist auch gegenüber Belastungen normal zu der Hauptebene des neuen Festlagers stabil, weil in den parallel zu der Hauptebene des Festlagers verlaufenden Wandungen der Kavität nur die zentralen Öffnungen mit abgerundetem Umfang vorgesehen sind, so dass diese Wandungen immer noch wesentliche Teile des Federkörpers abdecken und den Federkörper damit sicher in dem Rahmen halten. Die zentralen Öffnungen müssen jedoch, solange die neben ihnen verbleibenden Bereiche der parallel zu der Hauptebene des Festlagers verlaufenden Wandungen den Federkörper sicher in der Kavität halten, nicht randgeschlossen sein. Der genaue Umfang der zentralen Öffnungen in den parallel zu der Hauptebene des Festlagers verlaufenden Wandungen der Kavität ist auf die Arbeitswege des neuen Festlagers in den verschiedenen Richtungen in seiner Hauptebene abzustimmen.

Der Federkörper ist durch eine rechteckige Öffnung in einer für eine Anlage an dem abstützenden Bauteil vorgesehenen Oberseite des Rahmens in die Kavität eingesetzt. Durch Befestigen des Rahmens an dem abstützenden Bauteil wird die rechteckige Öffnung geschlossen. Gleichzeitig können auch nicht randgeschlossene zentrale Öffnungen in den parallel zu der Hauptebene des Festlagers verlaufenden Wandungen der Kavität durch das abstützende Bauteil begrenzt werden. Wenn der in die Kavität eingesetzte Federkörper zuvor etwas über die Oberseite des Rahmen überstand, wird der Federkörper bei der Montage des neuen Festlagers unter Druckvorspannung gesetzt. Dabei ist es bevorzugt, wenn der in die Kavität eingesetzte Federköper mit zwei in der Hauptebene des Festlagers im Randbereich des Federkörpers vorstehenden Stegen über die Oberseite des Rahmens übersteht, so dass er die Vorspannung im Wesentlichen mit seinem Randbereich aufnimmt.

Wenn der in die Kavität eingesetzte Federkörper zudem mit zwei in der Hauptebene des Festlagers im Randbereich des Federkörpers vorstehenden Stegen formschlüssig in Öffnungen am Grund der Kavität eingreift, sorgt die Druckvorspannung des Federkörpers dafür, dass diese Stege nicht aus den Öffnungen am Grund der Kavität austreten, wodurch eine zusätzliche Maßnahme zur Sicherung des Federkörpers an dem formsteifen Rahmen geschaffen ist.

Wenn die Stege an der Oberseite und Unterseite des Federkörpers spiegelsymmetrisch zu einer horizontalen Mittelebene des Federkörpers ausgebildet sind, kann der Federkörper auch andersherum in die Kavität eingesetzt werden, um eine Überkopfmontage des Rahmens zu ermöglichen, bei der die hier als Oberseite bezeichnete Seite des Rahmens mit der Öffnung, durch die der Federkörper in die Kavität eingesetzt ist, tatsächlich nach unten zeigt.

Für Einbausituationen, in denen die Öffnung in der Oberseite des Rahmens - egal ob diese tatsächlich nach oben oder nach unten zeigt - bei der Montage des Rahmens nicht oder zumindest nicht in einer Weise verschlossen wird, die den Aufbau einer Druckvorspannung des Federkörpers ermöglicht, kann der in die Kavität eingesetzte Federkörper mit in der Hauptebene des Festlagers seitlich vorspringenden Rastvorsprüngen in Rastausnehmungen in Seitenwandungen der Kavität eingerastet sein. Diese Rastausnehmungen liegen vorzugsweise in gewissem Abstand zu dem Grund der Kavität, um die Druckvorspannung sinnvoll aufbauen zu können. Alternativ zu einer Verrastung des Federkörpers in der Kavität kann die rechteckige Öffnung in der Oberseite des Rahmens durch eine Verschlussplatte verschlossen sein, die Teil des Festlagers ist, an der sich der in die Kavität eingesetzte Federkörper abstützt und die sich an dem Rahmen abstützt. Die Verschlussplatte kann vor der Montage des Festlagers durch eine elastische Vorspannung des Federkörpers kraftschlüssig an dem Rahmen gehalten und bei der Montage des Festlagers zusammen mit dem Rahmen fixiert werden.

Die zentralen Öffnungen in den parallel zu der Hauptebene des Festlagers verlaufenden Wandungen der Kavität können insbesondere einen kreisförmigen, elliptischen oder eiförmigen Umfang aufweisen, je nachdem welche Arbeitswege das neue elastische Festlager in den einzelnen Richtungen in seiner Hauptebene aufweist.

In der Hauptebene des neuen Festlagers füllt der Elastomerwerkstoff vorzugsweise den gesamten Umfang des Federkörpers bis auf eine Durchtrittsöffnung der Lagerbuchse aus. Anders gesagt bewegt sich ein Schnitt durch den Federkörper längs der Hauptebene bis auf die Durchtrittsöffnung der Lagerbuchse immer durch den Elastomerwerkstoff. Hierdurch weist das neue elastische Festlager eine gewisse Grundsteifigkeit auf, die für die Aufnahme von größeren Kräften zwischen dem abzustützenden Bauteil und dem abstützenden Bauteil bei seinen kompakten Abmessungen sinnvoll ist.

Vorzugsweise weist der Federkörper in der Hauptebene des Festlagers einen massiven Randbereich mit auf die zentralen Öffnungen in dem parallel zu der Hauptebene des Festlagers verlaufenden Wandungen abgestimmtem abgerundetem Innenumfang auf. Das heißt, außen ist dieser Randbereich in Anpassung an die quaderförmige Kavität in dem Rahmen in der Hauptebene des Festlagers zumindest im Wesentlichen rechteckig, während der Innenumfang kreisförmig, elliptisch oder eiförmig ist. Konkret kann der Innenumfang des massiven Randbereichs des Federkörpers etwas kleiner als der grundsätzlich die gleiche Form aufweisende Umfang der Öffnungen in den parallel zu der Hauptebene des Festlagers verlaufenden Wandungen der Kavität sein, um ein hartes Anschlagen eines in die Lagerbuchse eingesetzten Lagerbolzen an den formsteifen Rahmen des neuen Festlagers auch bei großen zwischen dem abzustützenden und dem abstützenden Bauteil auftretenden Kräften zu vermeiden.

Bei dem neuen elastischen Festlager weist der Federkörper vorzugsweise einen zwischen dem Innenumfang seines massiven Randbereichs und der Lagerbuchse umlaufenden Steg auf, dessen Erstreckung bei unbelastetem Festlager längs der Hauptebene des Festlagers in einer ersten Richtung von der Lagerbuchse zu dem Rahmen um mindestens 50 % größer als in der dazu entgegen gesetzten zweiten Richtung ist. Das neue elastische Festlager weist so in dieser ersten Richtung innerhalb seiner Hauptebene ausgehend von seinem unbelasteten Zustand einen größeren Arbeitsweg als in der dazu entgegen gesetzten zweiten Richtung auf. Damit kann eine in der ersten Richtung auftretende Gewichtskraft durch das neue elastische Festlager aufgenommen werden, ohne selbst im Fall geringer Abmessungen seinen maximalen Arbeitsweg in dieser ersten Richtung bereits aufzuzehren. Die Lagerbuchse kann sich unter Einwirkung der Gewichtskraft mittig innerhalb der zentralen Öffnungen in den parallel zu der Hauptebene des Festlagers verlaufenden Wandungen anordnen, um in allen Richtungen zumindest ungefähr gleich große Wege für die Aufnahme von Schwingungen der Lagerbuchse und dergleichen zur Verfügung zu stellen.

Der Steg kann seine maximale Dicke quer zu seiner Haupterstreckungsrichtung längs den zu der oben definierten ersten und zweiten Richtung orthogonalen Richtungen von der Lagerbuchse zu dem Rahmen aufweisen. Damit wird die Lagerbuchse trotz des umlaufenden Stegs im Wesentlichen durch zwei seitliche Federarme, in deren Bereich der Steg am dicksten ist, an dem massiven Randbereich des Federkörpers und über diesen an dem Rahmen abgestützt.

In einer anderen Ausführungsform ist eine Dicke des Stegs quer zu seiner Haupterstreckungsrichtung längs der oben definierten ersten Richtung um mindestens 100 % größer als in der dazu entgegen gesetzten zweiten Richtung. Dadurch wird in der ersten Richtung eine hohe Steifigkeit der Abstützung der Lagerbuchse an dem massiven Randbereich unter überwiegender günstiger Druckbelastung des Elastomerwerkstoffs des Federkörpers erreicht. Die Dicke des Stegs quer zu seiner Haupterstreckungsrichtung längs der ersten Richtung kann auch um mindestens 200 % oder um mindestens 300 % oder sogar um einen Faktor 4, d. h. etwa 400 % größer als längs der dazu entgegen gesetzten zweiten Richtung sein. Konkret kann eine Dicke des Stegs quer zu seiner Haupterstreckungsrichtung längs der ersten Richtung 3 bis 10 mm und längs der dazu entgegen gesetzten zweiten Richtung 1 bis 5 mm betragen.

In einer speziellen Ausführungsform des neuen Festlagers läuft der Steg trichterförmig um die Lagerbuchse um. D. h, der Steg ist gegenüber der Hauptebene des Festlagers geneigt. Auf diese Weise ist seine Erstreckung zwischen der Lagerbuchse und dem Rahmen längs seiner Haupterstreckungsrichtung überall größer als der Abstand zwischen der Lagerbuchse und dem massiven Randbereich des Federkörpers. Dadurch wird der in der Hauptebene des Festlagers zur Verfügung stehende Platz in besonders effektiver Weise ausgenutzt. In dieser Ausführungsform wird das neue elastische Festlagers durch den exzentrischen Trichter geprägt, der von dem um die Lagerbuchse umlaufenden Steg geformt wird. Dieser Trichter ist nicht nur bezüglich der Lage seiner Mündung relativ zu seinem Rand exzentrisch sondern weist vorzugsweise auch noch weitere Abweichungen von einem rotations symmetrischen Trichter auf. D. h. von der Lagerbuchse verläuft der Steg längs der ersten Richtung mit größerer Dicke, flacherem Winkel und über einen größeren Abstand zu dem Rahmen als in der zweiten Richtung.

Die Exzentrizität der Mündung des Trichters bezogen auf seinen Rand ist vorzugsweise derart, dass die Erstreckung des Stegs bei unbelastetem Festlager längs der Hauptebene des Festlagers in der ersten Richtung um 75 bis 125 %, d. h. um etwa 100 %, größer als in der dazu entgegen gesetzten zweiten Richtung ist. Konkret kann die Erstreckung des Stegs bei unbelastetem Festlager längs der Hauptebene des Festlagers in der ersten Richtung dabei 6 bis 12 mm, insbesondere 7 bis 10 mm, d. h. etwa 8 mm betragen. Diese Angabe bezieht sich auf ein elastisches Festlager, dessen Lagerbuchse einen freien Durchmesser von etwa 10 mm hat und das in seiner Haupterstreckungsebene maximale äußere Abmessungen des Federkörpers von etwa 40 mm aufweist.

Die Erstreckungen des Stegs längs der Hauptebene des Festlagers in den zu der oben definierten ersten und zweiten Richtung orthogonalen Richtungen von der Lagerbuchse können gleich groß sein und dabei einen Wert zwischen seiner Erstreckung längs der Hauptebene des Festlagers in der ersten Richtung und in der zweiten Richtung aufweisen. Insbesondere kann das neu elastische Festlager spiegelsymmetrisch zu einer Symmetrieebene ausgebildet sein, die normal zu seiner Hauptebene längs der ersten Richtung und der zweiten Richtung verläuft.

Zu den bereits angesprochenen weiteren Abweichungen von einer Rotationssymmetrie des von dem Steg des neuen elastischen Lagers ausgebildeten Trichters zählt es, dass ein Winkel des Stegs zu der zweiten Richtung um mindestens 30 % größer als zu der ersten Richtung ist. D. h., der Steg verläuft zu der ersten Richtung flacher als zu der zweiten Richtung. Er weist somit längs der ersten Richtung eine kürzere relative Erstreckung pro Abstandseinheit zwischen der Lagerbuchse und dem Umfang der zentralen Öffnungen in den parallel zu der Hauptebene des Festlagers verlaufenden Wandungen in der ersten Richtung auf als längs der zweiten Richtung. Hiermit wird der geringere Abstand zwischen der Lagerbuchse und dem Rahmen in der zweiten Richtung etwa kompensiert und insbesondere eine stärkere Belastung des Elastomerwerkstoffs der Federanordnung auf Zug in der zweiten Richtung unterbunden. Darüber hinaus weist der Steg in der ersten Richtung durch seinen flacheren Winkel zu der ersten Richtung eine etwas höhere Formsteifigkeit auf, die günstig beim Abtragen von Gewichtskräften in dieser ersten Richtung ist. Konkret kann ein Winkel des Stegs zu der ersten Richtung in dem Bereich von 30° bis 50° und zu der zweiten Richtung in dem Bereich von 60° bis 80° liegen.

Die Winkel des Stegs zu den zu der ersten Richtung und der zweiten Richtung orthogonalen Richtungen von der Lagerbuchse können gleich groß sein und einen Wert zwischen seinem Winkel zu der ersten und zweiten Richtung aufweisen.

Die Dicken des Stegs quer zu seiner Haupterstreckungsrichtung längs den zu der ersten Richtung und der zweiten Richtung orthogonalen Richtungen von der Lagerbuchse zu dem Rahmen können gleich groß sein und dabei einen Wert zwischen seiner Dicke längs der ersten und längs der zweiten Richtung aufweisen.

Die Lagerbuchse des neu elastischen Festlagers ist insbesondere zylindermantelförmig und einstückig mit der Federanordnung aus dem Elastomerwerkstoff ausgebildet.

Vorteilhafte Weiterbildungen der Erfindung ergeben sich aus den Patentansprüchen, der Beschreibung und den Zeichnungen.

### KURZBESCHREIBUNG DER FIGUREN

Die Erfindung wird anhand von zwei bevorzugten Ausführungsbeispielen unter Bezugnahme auf die beigefügten Zeichnungen näher erläutert und beschrieben.
- **Fig. 1**: ist eine perspektivische Seitenansicht schräg von oben eines Ausführungsbeispiels des elastischen Festlagers.
- **Fig. 2**: ist eine Seitenansicht des Festlagers gemäß Fig. 1.
- **Fig. 3**: ist ein Horizontalschnitt durch das Festlager gemäß Fig. 1 und 2 entlang der Schnittlinie III-III in Fig. 2.
- **Fig. 4**: ist ein Vertikalschnitt durch das Festlager gemäß den Fig. 1 bis 3 entlang der Schnittlinie IV-IV in Fig. 2.
- **Fig. 5**: ist eine perspektivische Seitenansicht schräg von unten des formsteifen Rahmens des Festlagers gemäß den Fig. 1 bis 4.
- **Fig. 6**: ist eine perspektivische Seitenansicht schräg von oben des Federkörpers des Festlagers gemäß den Fig. 1 bis 4.
- **Fig. 7**: ist eine perspektivische Seitenansicht schräg von oben auf ein zweites Ausführungsbeispiel des elastischen Festlagers.
- **Fig. 8**: ist ein Vertikalschnitt durch das Festlager gemäß Fig. 7 längs dessen Hauptebene.
- **Fig. 9**: ist eine Seitenansicht des Federkörpers eines weiteren Ausführungsbeispiels des elastischen Festlagers zur Verwendung z. B. mit dem formsteifen Rahmen gemäß Fig. 5.
- **Fig. 10**: ist ein Horizontalschnitt durch den Federkörper gemäß Fig. 9 entlang der Schnittlinie X-X in Fig. 9.
- **Fig. 11**: ist ein Vertikalschnitt durch den Federkörper gemäß Fig. 9 entlang der Schnittlinie XI-XI in Fig. 9.
- **Fig. 12**: ist eine Seitenansicht des Federkörpers gemäß den Fig. 9 bis 11, in der auch die verdeckten Konturen mit gestrichelten Linien eingezeichnet sind.
- **Fig. 13**: ist ein Horizontalschnitt durch den Federkörper noch eines weiteren Ausführungsbeispiels des elastischen Festlagers.
- **Fig. 14**: ist ein Vertikalschnitt durch den Federkörper gemäß Fig. 13.
- **Fig. 15**: ist eine perspektivische Seitenansicht schräg von oben auf noch ein weiteres Ausführungsbeispiel des elastischen Festlagers.
- **Fig. 16**: ist eine perspektivische Ansicht auf einen Teil des Rahmens des Festlagers gemäß Fig. 15.

### FIGURENBESCHREIBUNG

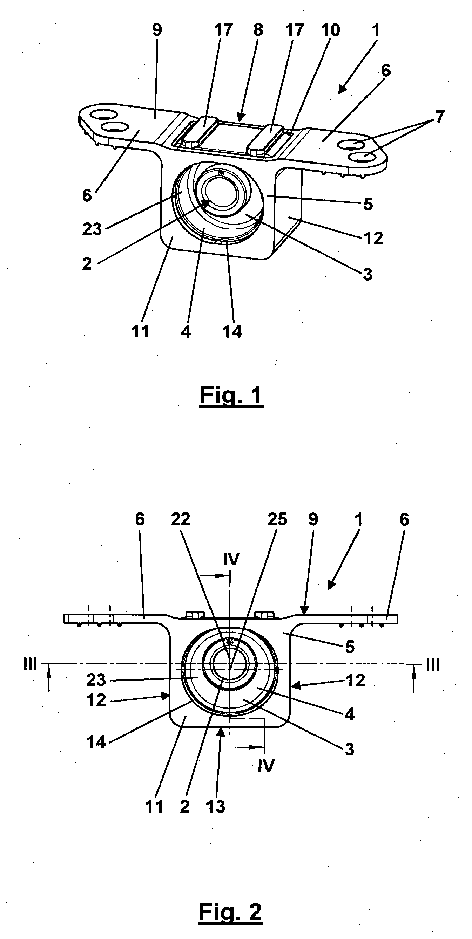

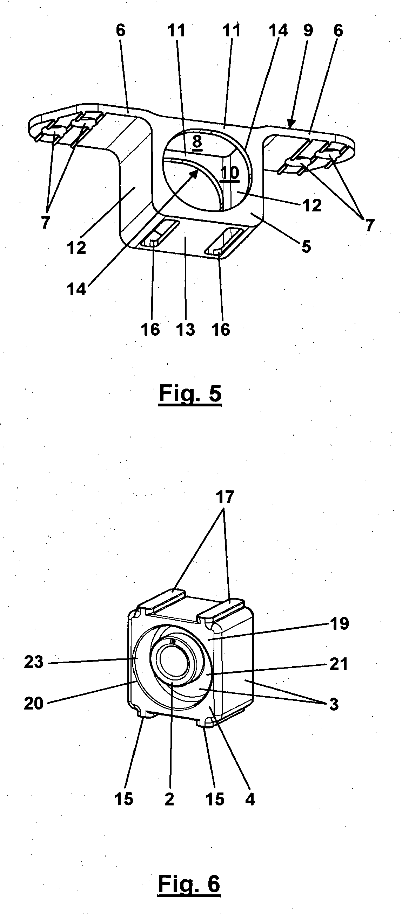

Das in den **Fig. 1 bis 4** in verschiedenen Ansichten als Ganzes und in den **Fig. 5 und 6** in seinen beiden Einzelteilen dargestellte Festlager 1 dient zur Lagerung einer hier nicht dargestellten Abgasanlage an einem hier ebenfalls nicht dargestellten Fahrzeugboden eines Kraftfahrzeugs. Für die Abgasanlage weist das Festlager eine Lagerbuchse 2 auf. Diese ist Teil eines Federkörpers 3 aus Elastomerwerkstoff 4. Der Federkörper 3 ist separat aus dem Elastomerwerkstoff 4 hergestellt und dann in einen formsteifen Rahmen 5 eingesetzt worden. Der formsteife Rahmen 5 weist Ausleger 6 mit Befestigungsbohrungen 7 zur starren Befestigung an dem Fahrzeugboden auf. Bei dieser Befestigung wird eine Öffnung 8 in der Oberseite 9 des starren Rahmens 5 verschlossen, über die der Federkörper 3 in den Rahmen 5 eingesetzt ist. Angeordnet ist der Federkörper 3 in dem Rahmen 5 in einer Kavität 10, wobei diese Kavität 10 eine quaderförmige Grundform aufweist. Alle diese quaderförmige Kavität 10 begrenzenden Wandungen 11 bis 13 liegen nicht nur punktuell, sondern möglichst flächig an dem Federkörper 3 an, um den Federkörper 3 abzustützen. Dabei sind in parallel zu einer Hauptebene 18 und damit auch parallel zu der Zeichenebene gemäß Fig. 2 verlaufenden Wandungen 11 kreisförmige Öffnungen 14 für das Eingreifen des Lagerbolzens der Abgasanlage in die Lagerbuchse 2 vorgesehen. Die neben den Öffnungen 14 verbleibenden Bereiche der Wandungen 11 halten den Formkörper 3 zuverlässig in der Kavität 10 des Rahmens 5 zurück. Zusätzlich gesichert ist der Formkörper 3 in der Kavität 10 durch normal zu der Hauptebene 18 verlaufende Stege 15 an seiner Unterseite, mit denen er in Öffnungen 16 in dem Grund 13 der Kavität 10 formschlüssig eingreift. Weitere normal zu der Hauptebene 18 verlaufende Stege 17 des Federkörpers 3 stehen vor der Montage des Festlagers 1 leicht über die Oberseite 9 über und sorgen so nach der Montage für eine Druckvorspannung des Federkörpers 3 in die Kavität 10 hinein, die auch die Stege 15 in den Öffnungen 16 hält. Die Stege 15 und 17 sind spiegelsymmetrisch zu einer horizontalen Mittelebene des Federkörpers 3 ausgebildet. Damit ist auch eine Überkopfmontage des Rahmens 5 bei gleichbleibender Ausrichtung des Federkörpers 3 möglich, bei der der Federkörper von unten in die Kavität 10 eingesetzt ist und sich nach unten an einer die Öffnung 8 verschließenden Wandung abstützt.

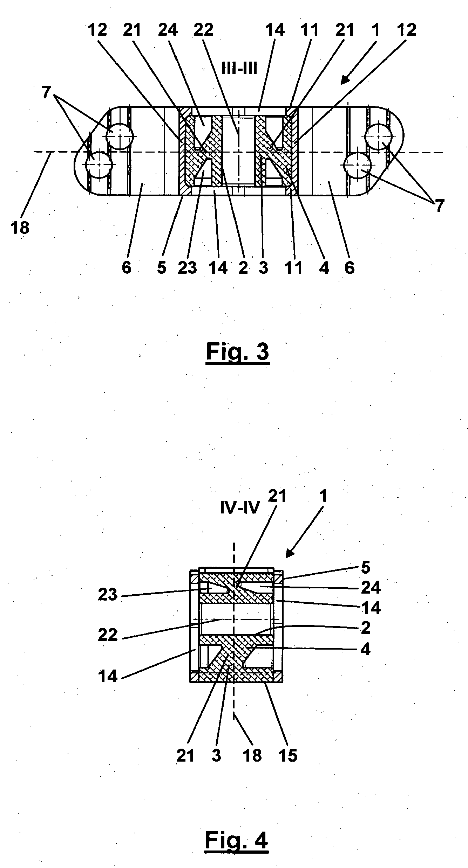

Der Federkörper 3 besteht aus einem massiven Randbereich 19, an dem die Stege 15 und 17 vorgesehen sind, der aber ansonsten einen rechteckigen äußeren Umfang, d. h. genauer einen äußeren Umfang in Form eines gleichwinkligen Parallelogramms mit abgerundeten Ecken, aufweist und der einen auf die Öffnungen 14 der parallel zu der Hauptebene des Festlagers 1 verlaufenden Wandungen 11 abgestimmten kreisförmigen Innenumfang 20 aufweist. Zwischen dem Innenumfang 20 und der Lagerbuchse 2 erstreckt sich ein hier trichterförmiger Steg 21 um die Lagerbuchse 2. Dieser trichterförmige Steg 21 ist unterhalb der Lagerbuchse 2 dicker und erstreckt sich über einen größeren Abstand zwischen dem Innenumfang 20 und der Lagerbuchse 2 und unter einen flacheren Winkel zu der Hauptebene 18 als oberhalb der Lagerbuchse 2. Dies geht besonders deutlich aus Fig. 4 hervor, während Fig. 3 zeigt, dass der Steg seitlich, d. h. zu der Linie der in Fig. 3 eingezeichneten Achse 22 spiegelsymmetrisch ist. Längs der Hauptebene 18 erstreckt sich der Elastomerwerkstoff 4 des Federkörpers 3 über den gesamten Abstand zwischen der Lagerbuchse 2 und dem Innenumfang 20 rund um die Lagerbuchse 2. Auf beiden Seiten an den Steg 21 angrenzende Ausnehmungen 23 und 24 überlappen einander nicht.

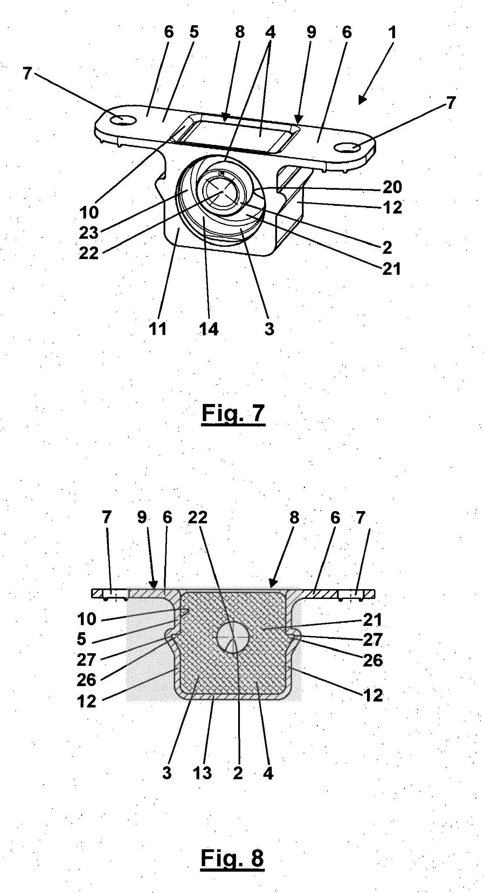

Das in den **Fig. 7 und 8** gezeigte Festlager 1 ist für seine Funktion nicht darauf angewiesen, dass die Öffnung 8 an der Oberseite 9 des Rahmens 5 bei seiner Montage verschlossen wird und sich der Federkörper 3 dort an einer Wandung abstützen kann. Um dennoch eine Vorspannung auf den Federkörper 3 senkrecht zu der Oberseite 9 aufzubringen, weist er in der Hauptebene 18 des Festlagers 1 seitlich vorspringende Rastvorsprünge 26 auf, die in Rastausnehmungen 27 in den Seitenwandungen 12 der Kavität 10 eingerastet sind. Die Rastausnehmungen 27 können wie hier dargestellt durch Rücksprünge der Seitenwandungen 12 oder aber beispielsweise auch durch Öffnungen in den Seitenwandungen der Kavität 10 ausgebildet sein. Über diese Rastverbindungen 26, 27 wird der Federkörper 3 auch bei nicht verschlossener Öffnung 8 fest in dem Rahmen 5 gehalten. Fig. 8 zeigt überdies, dass der Elastomerwerkstoff 4 des Federkörpers 3 den Querschnitt der Kavität 10 längs der Hauptebene des Festlagers 1 bis auf die Lagerbuchse 2 vollständig überspannt. Das heißt keine der Ausnehmungen 23, 24 erstreckt sich bis in die Hauptebene des Festlagers 1 hinein.

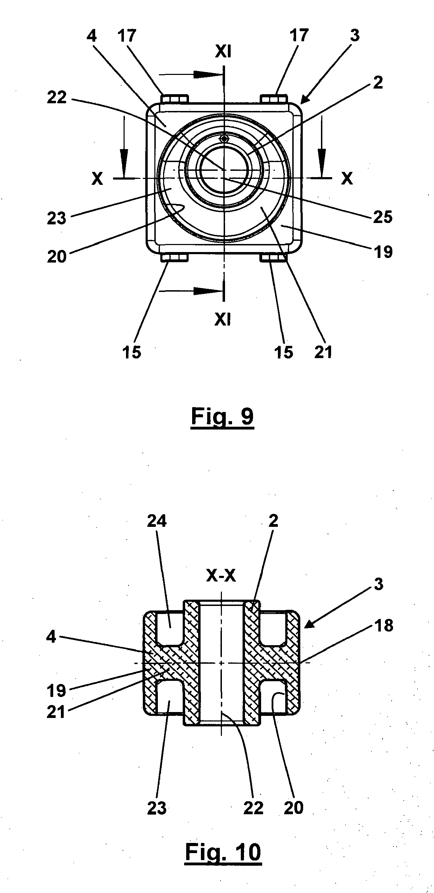

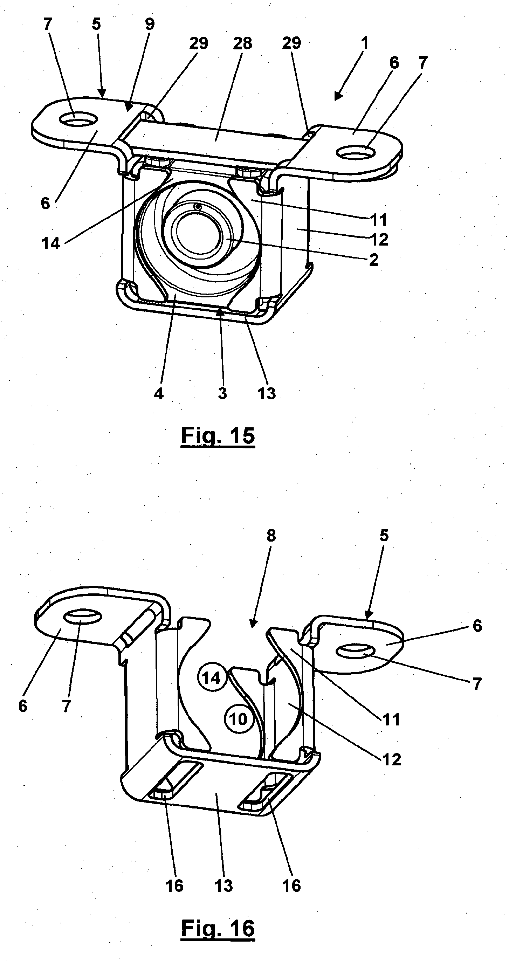

Der in den **Fig. 9 bis 12** dargestellte Federkörper 3 aus Elastomerwerkstoff 4 ist z. B. zur Verwendung mit dem in Fig. 5 dargestellten Rahmen, aber auch mit dem in der noch folgenden Fig. 16 dargestellten Rahmen geeignet. Er unterscheidet sich von der Ausführungsform des Federkörpers des elastischen Festlagers gemäß den Fig. 1 bis 4 durch die Ausbildung seines Stegs 21, der hier nicht trichterförmig, sondern spiegelsymmetrisch zu der Hauptebene 18 ausgebildet ist. Dabei weist der Steg 21 seine maximale Dicke in seitlicher Richtung von der Lagerbuchse 2 zu dem Randbereich 19 auf, was mit der Abstützung der Lagerbuchse 2 durch seitliche Federarme vergleichbar ist. Dennoch läuft der Steg 21 zwischen der Lagerbuchse 2 und dem Innenumfang 20 des Randbereichs 19 ganz um die Achse 22 um. Oberhalb und unterhalb der Lagerbuchse 2 ist der Steg 21 dünner gehalten, insbesondere ist er unten, wo der Abstand der Lagerbuchse 2 zu dem Randbereich 19 am größten ist, am dünnsten. Konkret verjüngt er sich hier von der Lagerbuchse 2 zu dem Randbereich 19 hin.

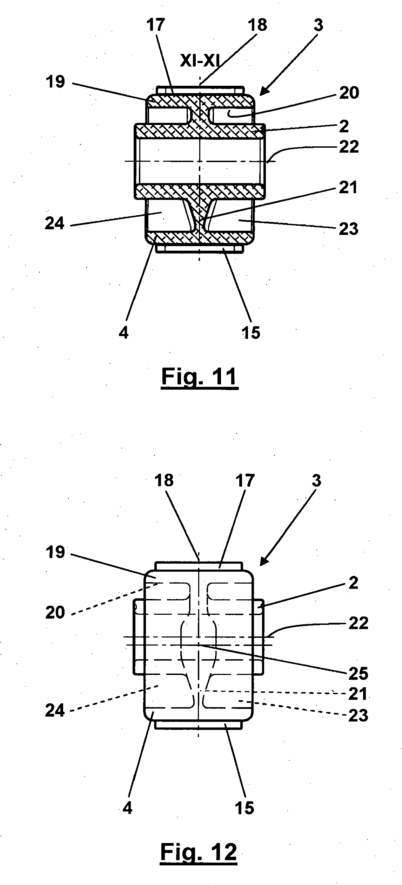

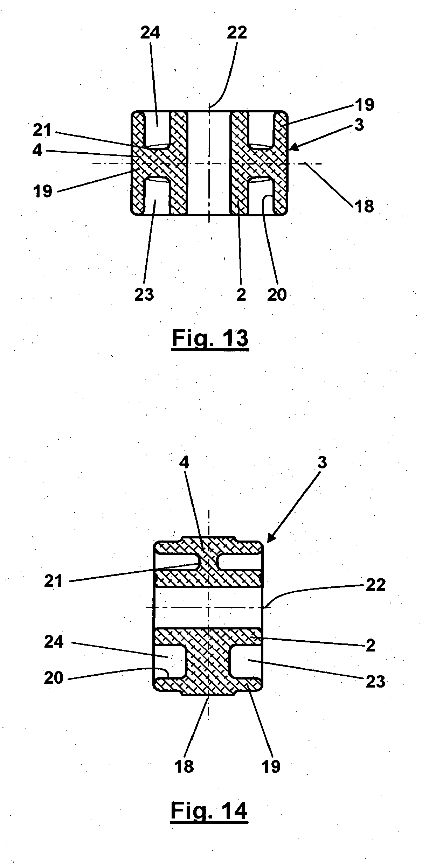

In den **Fig. 13 und 14** ist eine weitere alternative Ausführungsform des Federkörpers 3 in zwei Schnitten dargestellt, wobei der horizontale Schnitt gemäß Fig. 13 analog zu dem Schnitt gemäß Fig. 10 ausgeführt ist und der vertikale Schnitt gemäß Fig. 14 analog zu dem Schnitt gemäß Fig. 11. Hier ist der Steg 21 oberhalb der Buchse 2, d. h. dort, wo er seinen geringsten Abstand zu dem Wandbereich 19 aufweist, am dünnsten und unter der Lagerbuchse 2, d. h. dort, wo er seinen größten Abstand zu dem Randbereich 19 aufweist, am dicksten. Mit dem Abstand zwischen der Lagerbuchse 2 und dem Randbereich 19 nimmt die Dicke des Stegs 21 von oben nach unten kontinuierlich zu. Die Dicke des Stegs 21 ist über den jeweiligen Abstand zwischen der Lagerbuchse 2 und dem Randbereich 19 im Wesentlichen konstant, und der Steg 21 ist insgesamt spiegelsymmetrisch zu der Hauptebene 18 ausgebildet. Dieser Aufbau des Federkörpers 3 entspricht damit bis auf die Neigung zu der Hauptebene 18, d. h. die Trichterform, dem Federkörper 3 gemäß den Fig. 1 bis 4 und 6.

Das Festlager 1 gemäß Fig. 15, dessen Rahmen 5 separat in Fig. 16 dargestellt ist, umfasst hier denselben Federkörper 3, wie er in den Fig. 1 bis 4 und 6 dargestellt ist. Das heißt, das Festlager 1 unterscheidet sich nur durch die Ausbildung seines Rahmens 5 von der Ausführungsform des Festlagers 1 gemäß den Fig. 1 bis 6. Der Rahmen 5 des Festlagers 1 gemäß den Fig. 15 und 16 könnte aber auch mit anderen Federkörpern 3, wie sie voranstehend beschrieben wurden, kombiniert werden. Die Besonderheit des Rahmens 5 besteht hier darin, dass er nicht wie bei der Ausführungsform gemäß den Fig. 1 bis 5 als Guss- und/oder Frästeil ausgebildet ist, sondern als Blechprägeteil. Bei diesem sind die Öffnungen 14 in den Wandungen 11, die den Federkörper 3 normal zu der Hauptebene des Festlagers 1 abstützen, nicht innerhalb der Wandungen 11 randgeschlossen ausgebildet. Vielmehr werden die Öffnungen 14 hier nach unten durch den Grund 13 der Kavität und nach oben durch eine Verschlussplatte 28 begrenzt. Die Verschlussplatte 28 verschließt die Öffnung 8 der Kavität 10 in dem Rahmen und erstreckt sich dabei durch Öffnungen 29 im oberen Bereich der Seitenwandungen 12 bis unter die Ausleger 6 des Rahmens 5, wo sie mit Befestigungsbohrungen versehen ist, die mit den Befestigungsbohrungen 7 in dem Rahmen fluchten. Die Verschlussplatte 28 wird vor der Montage des Festlagers 1 durch eine auf den Federkörper 3 aufgebrachte Vorspannung kraftschlüssig an dem Rahmen 5 gehalten und bei der Montage des Festlagers 1 mit den durch die Befestigungsbohrung 7 hindurchgreifenden Befestigungselementen endgültig fixiert. Die Verschlussplatte 28 kann entfallen, wenn die Öffnung 8 bei der Montage des Festlagers 1 an einem abstützenden Bauteil durch das abstützende Bauteil so verschlossen wird, dass der Federkörper 3 mit Vorspannung in der Kavität 10 fixiert ist.

Die in den Figuren dargestellten Festlager 1 können äußerst kompakte Abmessungen auf weisen. Diese können in der Hauptebene 18 bei weniger als 4 x 4 cm liegen, einschließlich der die Kavität 10 begrenzenden Wandungen 11 bis 13 des formsteifen Rahmens 5, aber ohne dessen Ausleger 6.

Bei den Festlagern 1 können der Federkörper 3 und der Rahmen 5 unabhängig voneinander modifiziert werden, solange ihre Schnittstellen in Form der äußeren Abmessungen des Federkörpers 3 und der Innenabmessungen der Kavität 10 des Rahmen 6 erhalten bleiben.

### BEZUGSZEICHENLISTE

- 1: Festlager
- 2: Lagerbuchse
- 3: Federkörper
- 4: Elastomerwerkstoff
- 5: Rahmen
- 6: Ausleger
- 7: Befestigungsbohrung
- 8: Öffnung
- 9: Oberseite
- 10: Kavität
- 11: Wandung
- 12: Seitenwandung
- 13: Grund
- 14: Öffnung
- 15: Steg
- 16: Öffnung
- 17: Steg
- 18: Hauptebene
- 19: Randbereich
- 20: Innenumfang
- 21: Steg
- 22: Achse
- 23: Ausnehmung
- 24: Ausnehmung
- 25: Lagermittelpunkt
- 26: Rastvorsprung
- 27: Rastvertiefung
- 28: Verschlussplatte
- 29: Öffnung

## Patentansprüche

1. Elastisches Festlager (1) für die Lagerung eines dynamisch beanspruchten abzustützenden Bauteils an einem abstützenden Bauteil,
- mit einem formsteifen Rahmen (5),
- mit Befestigungseinrichtungen (6, 7), um den Rahmen (5) starr an dem abstützenden Bauteil zu befestigen, und
- mit einem Federkörper (3), der innerhalb des Rahmens (5) in einer Hauptebene (18) des Festlagers (1) eine Lagerbuchse (2) für das abzustützende Bauteil elastisch abstützt,
- wobei der Umfang des Federkörpers (3) in der Hauptebene (18) des Festlagers (1) eine rechteckige Grundform aufweist,
- wobei der aus dem Elastömerwerkstoff (4) hergestellte Federkörper (3) in eine Kavität (10) des Rahmens (5) eingesetzt ist,
- die eine quaderförmige Grundform aufweist und
- deren parallel zu der Hauptebene (18) des Festlagers (1) verlaufende Wandungen (11) zentrale Öffnungen (14) für den Durchtritt des abzustützenden Bauteils aufweisen, und
- wobei der aus einem Elastomerwerkstoff (4) hergestellte Federkörper (3) formschlüssig von dem Rahmen (5) gehalten wird,
**dadurch gekennzeichnet, dass** der Federkörper (3) durch eine rechteckige Öffnung (8) in einer für eine Anlage an dem abstützenden Bauteil vorgesehenen Oberseite (9) des Rahmens (5) in die Kavität (10) eingesetzt ist und dass die zentralen Öffnungen (14) der parallel zu der Hauptebene (18) des Festlagers (1) verlaufenden Wandungen (11) der Kavität (10) einen abgerundeten Umfang aufweisen.

2. Festlager (1) nach Anspruch 1, **dadurch gekennzeichnet, dass** der in die Kavität (10) eingesetzte Federkörper (3) an den die Kavität begrenzenden Wandungen (11 bis 13) anliegt.

3. Festlager (1) nach Anspruch 1 oder 2, **dadurch gekennzeichnet, dass** der in die Kavität (10) eingesetzte Federkörper (3) über die Oberseite (9) des Rahmens (5) übersteht.

4. Festlager (1) nach Anspruch 3, **dadurch gekennzeichnet, dass** der in die Kavität (10) eingesetzte Federkörper (3) mit zwei in der Hauptebene (18) des Festlagers (1) im Randbereich des Federkörpers (3) vorspringenden Stegen (17) über die Oberseite (9) des Rahmens (5) übersteht.

5. Festlager (1) nach Anspruch 1, oder 2, **dadurch gekennzeichnet, dass** die rechteckige Öffnung (8) durch eine Verschlussplatte (28) verschlossen ist, an der sich der in die Kavität (10) eingesetzte Federkörper (3) abstützt und die sich an dem Rahmen (5) abstützt.

6. Festlager (1) nach einem der vorhergehenden Ansprüche, **dadurch gekennzeichnet, dass** der in die Kavität (10) eingesetzte Federkörper (3) mit zwei in der Hauptebene (18) des Festlagers (1) im Randbereich des Federkörpers (3) vorspringenden Stegen (15) formschlüssig in Öffnungen (16) am Grund (13) der Kavität (10) eingreift.

7. Festlager (1) nach einem der vorhergehenden Ansprüche, **dadurch gekennzeichnet, dass** der in die Kavität (10) eingesetzte Federkörper (3) mit in der Hauptebene (18) des Festlagers (1) seitlich vorspringenden Rastvorsprüngen (26) in Rastausnehmungen (27) in Seitenwandungen (12) der Kavität (10) eingerastet ist.

8. Festlager (1) nach einem der vorhergehenden Ansprüche, **dadurch gekennzeichnet, dass** die zentralen Öffnungen (14) in den parallel zu der Hauptebene (18) des Festlagers (1) verlaufenden Wandungen (11) der Kavität (10) einen kreisförmigen, elliptischen oder eiförmigen Umfang aufweisen.

9. Festlager (1) nach einem der vorhergehenden Ansprüche, **dadurch gekennzeichnet, dass** der Elastomerwerkstoff (4) in der Hauptebene (18) des Festlagers (1) den gesamten Umfang des Federkörpers (3) bis auf eine Durchtrittsöffnung der Lagerbuchse (2) ausfüllt.

10. Festlager (1) nach einem der vorhergehenden Ansprüche, **dadurch gekennzeichnet, dass** der Federkörper (3) in der Hauptebene (18) des Festlagers (1) einen Randbereich mit auf die zentralen Öffnungen (14) in den beiden parallel zu der Hauptebene (18) des Festlagers (1) verlaufenden Wandungen (11) abgestimmtem abgerundetem Innenumfang (20) aufweist.

11. Festlager (1) nach einem der vorhergehenden Ansprüche, **dadurch gekennzeichnet, dass** der Federkörper (3) einen um die Lagerbuchse (2) umlaufenden Steg (21) aufweist, dessen Erstreckung bei unbelastetem Festlager (1) längs der Hauptebene (18) des Festlagers (1) in einer ersten Richtung von der Lagerbuchse um mindestens 50 % größer als in einer dazu entgegen gesetzten zweiten Richtung von der Lagerbuchse (2) ist.

12. Festlager (1) nach Anspruch 11, **dadurch gekennzeichnet, dass** der Steg (21) seine maximale Dicke quer zu seiner Haupterstreckungsrichtung längs den zu der ersten und zweiten Richtung orthogonalen Richtungen von der Lagerbuchse (2) aufweist.

13. Festlager (1) nach Anspruch 11 oder 12, **dadurch gekennzeichnet, dass** eine Dicke des Stegs (21) quer zu seiner Haupterstreckungsrichtung längs der ersten Richtung um mindestens 100 % größer als in der dazu entgegen gesetzten zweiten Richtung ist.

14. Festlager (1) nach einem der Ansprüche 11 bis 13, **dadurch gekennzeichnet, dass** der Steg (21) trichterförmig um die Lagerbuchse (2) umläuft.

15. Festlager (1) nach Anspruch 14, **dadurch gekennzeichnet, dass** ein Winkel des Stegs (21) zu der Hauptebene (18) des Festlagers (1) in der zweiten Richtung um mindestens 30 % größer als in der ersten Richtung ist.

## Claims

1. Elastic fixed bearing (1) for mounting a dynamically loaded part to be supported on a supporting part, the fixed bearing (1) comprising
- a dimensionally stiff frame (5),
- fixation devices (6, 7) to rigidly fix the frame (5) to the supporting part, and
- a spring body (3) which, in a main plane (18) of the fixed bearing (1), elastically supports a bearing bushing (2) for the part to be supported,
- wherein the circumference of the spring body (3), in the main plane (18) of the fixed bearing (1), has a rectangular basic shape,
- wherein the spring body (3) made of an elastomer material (4) is inserted into a cavity (10) of the frame (5),
- which has a rectangular block basic form, and
- whose walls (11) running in parallel to the main plane (18) of the fixed bearing (1) have central openings (14) for passage of the part to be supported, and
- wherein the spring body (3) made of the elastomer material (4) is held by the frame (5) with positive fit,
**characterised in that** the spring body (3) is inserted into the cavity (10) through a rectangular opening (8) in an upper side (9) of the frame (5) intended for leaning against the supporting part, and that the central openings (14) of the walls (11) of the cavity (10) running in parallel to the main plane (18) of the fixed bearing (1) have a rounded circumference.

2. Fixed bearing (1) of claim 1, **characterised in that** the spring body (3) inserted into the cavity (10) leans against the walls (11 to 13) delimiting the cavity.

3. Fixed bearing (1) of claim 1 or 2, **characterised in that** the spring body (3) inserted into the cavity (10) extends beyond the upper side (9) of the frame (5).

4. Fixed bearing (1) of claim 3, **characterised in that** the spring body (3) inserted into the cavity (10) extends beyond the upper side (9) of the frame (5) by two webs (17) protruding in the main plane (18) of the fixed bearing (1) in the boundary area of the spring body (3).

5. Fixed bearing (1) of claim 1 or 2, **characterised in that** the rectangular opening (8) is closed by a closure plate (23) at which the spring body (3) inserted into the cavity (10) is supported and which is supported at the frame (5).

6. Fixed bearing (1) of any of the preceding claims, **characterised in that** the spring body (3) inserted into the cavity (10), with two webs (15) protruding in the main plane (18) of the fixed bearing (1) in the boundary area of the spring body (3), engages with positive fit into openings (16) at the ground (13) of the cavity (10).

7. Fixed bearing (1) of any of the preceding claims, **characterised in that** the spring body (3) inserted into the cavity (10), with locking protrusions (26) laterally protruding in the main plane (18) of the fixed bearing (1), is locked in locking recesses (27) in side walls (12) of the cavity (10).

8. Fixed bearing (1) of any of the preceding claims, **characterised in that** the central openings (14) in the walls (11) of the cavity (10) running in parallel to the main plane (18) of the fixed bearing (1) have a circular, elliptic or egg-shaped circumference.

9. Fixed bearing (1) of any of the preceding claims, **characterised in that** the elastomer material (4), in the main plane (18) of the fixed bearing (1), fills up the entire circumference of the spring body (3) except of an opening of the bearing bushing (2).

10. Fixed bearing (1) of any of the preceding claims, **characterised in that** the spring body (3), in the main plane (18) of the fixed bearing (1), has a boundary area with a rounded inner circumference (20) adapted to the central openings (14) in the two walls (11) running in parallel to the main plane (18) of the fixed bearing (1).

11. Fixed bearing (1) of any of the preceding claims, **characterised in that** the spring body (3) comprises a web (21) running around the bearing bushing (2), whose extension, with unloaded fixed bearing (1), along the main plane (18) of the fixed bearing (1), is at least 50 % longer in a first direction away from the bearing bushing than in an opposite second direction away from the bearing bushing (2).

12. Fixed bearing (1) of claim 11, **characterised in that** the web (21) has its maximum thickness perpendicular to its direction of main extension along the directions away from the bearing bushing (2) and orthogonal to the first and second directions.

13. Fixed bearing (1) of claim 11 or 12, **characterised in that** a thickness of the web (21) perpendicular to its direction of main extension is higher by at least 100 % along the first direction than in the opposite second direction.

14. Fixed bearing (1) of any of the claims 11 to 13, **characterised in that** the web (21) runs around the bearing bushing (2) in a funnel-shaped way.

15. Fixed bearing (1) of claim 14, **characterised in that** an angle of the web (21) to the main plane (18) of the fixed bearing (1) is by at least 30 % greater in the second direction than in the first direction.

## Revendications

1. Palier fixe élastique (1) pour le logement d'un élément d'appui sollicité de manière dynamique sur un élément d'appui,
- avec un cadre rigide (5),
- avec des dispositifs de fixation (6, 7) pour fixer le cadre (5) de manière rigide à l'élément d'appui, et
- avec un élément élastique (3) qui appuie de manière élastique à l'intérieur du cadre (5) dans un plan principal (18) du palier fixe (1) une douille de palier (2) pour l'élément d'appui,
- la circonférence de l'élément élastique (3) présentant, dans le plan principal (18) du palier fixe (1), une forme de base rectangulaire,
- l'élément élastique (3) constitué d'un matériau élastomère (4) étant inséré dans une cavité (10) du cadre (5),
- qui présente une forme de base carrée et
- dont les parois (11) parallèles au plan principal (18) du palier fixe (1) présentent des ouvertures centrales (14) pour le passage de l'élément d'appui, et
- l'élément élastique (3) constitué d'un matériau élastomère (4) étant maintenu par le cadre (5) grâce à une complémentarité de forme,
**caractérisé en ce que** l'élément élastique (3) est inséré dans la cavité (10) à travers une ouverture rectangulaire (8) sur un côté supérieur (9) du cadre (5), prévu pour un appui contre l'élément d'appui, et **en ce que** les ouvertures centrales (14) des parois (11), parallèles au plan principal (18) du palier fixe (1), de la cavité (10) présentent une circonférence arrondie.

2. Palier fixe (1) selon la revendication 1, **caractérisé en ce que** l'élément élastique (3) inséré dans la cavité (10) s'appuie contre les parois (11 à 13) délimitant la cavité.

3. Palier fixe (1) selon la revendication 1 ou 2, **caractérisé en ce que** l'élément élastique (3) inséré dans la cavité (10) est en saillie par rapport au côté supérieur (9) du cadre (5).

4. Palier fixe (1) selon la revendication 3, **caractérisé en ce que** l'élément élastique (3) inséré dans la cavité (10) est en saillie, avec deux nervures (17) dépassant dans le plan principal (18) du palier fixe (1) au bord de l'élément élastique (3), par rapport au côté supérieur (9) du cadre (5).

5. Palier fixe (1) selon la revendication 1 ou 2, **caractérisé en ce que** l'ouverture rectangulaire (8) est fermée par une plaque de fermeture (28), contre laquelle s'appuie l'élément élastique (3) inséré dans la cavité (10), et qui s'appuie contre le cadre (5).

6. Palier fixe (1) selon l'une des revendications précédentes, **caractérisé en ce que** l'élément élastique (3) inséré dans la cavité (10) s'emboîte grâce à une complémentarité de forme, avec deux nervures (15) dépassant dans le plan principal (18) du palier fixe (1) au bord de l'élément élastique (3), dans des ouvertures (16) au fond (13) de la cavité (10).

7. Palier fixe (1) selon l'une des revendications précédentes, **caractérisé en ce que** l'élément élastique (3) inséré dans la cavité (10) est encliqueté dans des évidements d'encliquetage (27) dans des parois latérales (12) de la cavité (10), avec des saillies d'encliquetage (26) dépassant latéralement dans le plan principal (18) du palier fixe (1).

8. Palier fixe (1) selon l'une des revendications précédentes, **caractérisé en ce que** les ouvertures centrales (14) présentent, dans les parois (11) de la cavité (10), parallèles au plan principal (18) du palier fixe (1), une circonférence circulaire, elliptique ou ovoïde.

9. Palier fixe (1) selon l'une des revendications précédentes, **caractérisé en ce que** le matériau élastomère (4) remplit, dans le plan principal (18) du palier fixe (1), toute la circonférence de l'élément élastique (3) excepté une ouverture de passage de la douille de palier (2).

10. Palier fixe (1) selon l'une des revendications précédentes, **caractérisé en ce que** l'élément élastique (3) comprend, dans le plan principal (18) du palier fixe (1), un bord avec une circonférence interne arrondie (20) adaptée aux ouvertures centrales (14) dans les deux parois (11) parallèles au plan principal (18) du palier fixe (1).

11. Palier fixe (1) selon l'une des revendications précédentes, **caractérisé en ce que** l'élément élastique (3) comprend une nervure (21) autour de la douille de palier (2), dont l'extension lorsque le palier fixe (1) n'est pas sollicité, est 50% supérieure, le long du plan principal (18) du palier fixe (1) dans une première direction à partir de la douille de palier, à une extension dans une deuxième direction à partir de la douille de palier (2).

12. Palier fixe (1) selon la revendication 11, **caractérisé en ce que** la nervure (21) présente une épaisseur maximale transversalement par rapport à sa direction d'extension principale le long des directions orthogonales à la première et à la deuxième direction à partir de la douille de palier (2).

13. Palier fixe (1) selon la revendication 11 ou 12, **caractérisé en ce qu'**une épaisseur de la nervure (21) est 100% supérieure, transversalement par rapport à sa direction d'extension principale le long de la première direction, à l'épaisseur dans la deuxième direction opposée.

14. Palier fixe (1) selon l'une des revendications 11 à 13, **caractérisé en ce que** la nervure (21) entoure la douille de palier (2) avec une forme d'entonnoir.

15. Palier fixe (1) selon la revendication 14, **caractérisé en ce qu'**un angle entre la nervure (21) et le plan principal (18) du palier fixe (1) est, dans la deuxième direction, au moins 30% supérieur à l'angle dans la première direction.
